# EUROPEAN PATENT APPLICATION

(11) **EP 1 233 484 A1**
(43) Date of publication of application: **21.08.2002**
(21) Application number: 01440029.5
(22) Date of filing: 14.02.2001
(51) Int. Cl.: H01S 3/067, H01S 3/30, H04B 10/17

(54) **Optical fibre amplifier**

(71) Applicant: ALCATEL, 75008 Paris (FR)
(72) Inventor: Hamoir, Dominique, 92120 Montrouge (FR)
(74) Representative: Rausch, Gabriele, Dr.

(57) **Abstract**

The present invention provides an optical fibre amplifier comprising input means and output means, an optical fibre path connecting signal-transmissively said input and output means, wherein said optical fibre path comprises a Raman fibre amplifier and a rare-earth-doped fibre amplifier, wherein said Raman fibre amplifier and said rare-earth-doped fibre amplifier are set in a serial arrangement, whereby the Raman amplification fibre and the rare-earth-doped fibre are pumped by the same pump wavelength. Furthermore the present invention provides an optical fibre communication system comprising said optical fibre amplifier.

## Description

The present invention relates to an optical fibre amplifier and to an optical fibre communication system comprising such amplifiers.

The transmission capacity of optical fibres is expected to advance in the future with the objective of reaching 10 Tbit/s capacities, and over. However, even with an extremely good spectral efficiency of 0.8 as in some amplification arrangements disclosed in the prior art, the useful bandwidth that is required to stuff a transmission capacity of 10 Tbit/s is in excess of 12.5 THz. Known C-band and L-band EDFAs, i.e. EDFAs for amplifying the wavelength region conventionally termed as the C -band, with a wavelength range from about 1520-1565 nm, and amplifying the wavelength region conventionally termed as the L-band, with a wavelength range from 1565-1605 nm, offer an overall useful bandwidth of only 8 THz (4 THz each).

Thus, a key to this evolution toward capacities over 10 Tbit/s is the availability of extremely-broad-band optical amplifiers, offering amplification over nearly all the transmission window allowed by silica. These requirements can be met inter alia by Raman amplification and under specific and limited conditions by rare-earth-doped fibres, such as for example EDFAs (Erbium-doped fibre amplifiers) or TDFAs (Thulium-doped fibre amplifiers).

Raman amplification allows to extend the transmission to wavelengths which are not addressed by fibres doped with rare-earth elements, for example Erbium or Thulium. This means, that Raman amplification opens the possibility to have optical transmission systems either in the 1.3-µm transmission window as well as in the 1.5-µm transmission window, or even in the 1.4-µm and 1.6-µm wavelength regions.

To combine the advantages of Raman and Rare-Earth amplification, D. Bayart et al. proposed in El Lett. vol.36, pp. 1569-1571 (2000) a FRA (Fibre Raman Amplifier) in a serial arrangement with a TDFA. This arrangement led to good amplification results and spectral coverage. However, every amplification fibre is pumped by a different pump wavelength and the conversion efficiency is poor, because a lot of residual pump photons are lost.

Usually, the approximate values for the bandwidths of the different "bands" as explained in the foregoing as well as in the following can be summarized as follows:

| **XS-band** | **S-Band** | **C-band** | **L-Band** |
|---|---|---|---|
| 1270 to 1350 nm | 1450 to 1525 nm | 1525 to 1565 nm | 1565 to 1610 nm |
| 230 to 228 THz | 204 to 199 THz | 196 to 191 THz | 191 to 186 THz |

Bandwidth values are given in nm and in Hz since channels of optical systems are spaced in frequency.

As a consequence of the problems mentioned in the foregoing sections, there is a need to add 4 to 5 THz of bandwidth in the perspective of reaching a transmission capacity of 10 Tbit/s even by maintaining a good spectral efficiency of for example 0.8. This addition or extension of bandwidth is usually preferred in the S-band covering wavelengths up to 1520 nm, just below the C band and/or in the so called "XL-band" at wavelengths > 1605 nm.

For amplification in the C-band and in the L-band it is further known to use two EDFAs in a parallel arrangement, involving band-multiplexers and -demultiplexers with a cut-off at about 1560-1570 nm.

However, this arrangement has considerable disadvantages: It leads to a dual-band amplifier structure, with about 1 THz of bandwidth lost between the respective bands (9 THz = 2 x 4 THz + 1 THz) and 14 THz of transmission fibre bandwidth have to be spent in order to effectively transmit over 3 x 4 THz = 12 THz).

An alternative is to use an EDFA in serial arrangement with a Raman amplifier for covering the C+L band as a whole, with no bandwidth lost for multiplexing/demultiplexing the two sub-bands. This combination saves bandwidth.

However the Raman amplifier is not very efficient, resulting in a poor overall efficiency for the combination.

Therefore, the problem of the present invention is to provide an optical fibre amplifier which combines good amplification efficiency with additional bandwidth for amplification.

This problem is solved by an optical fibre amplifier with the features of claim 1.

Accordingly, an optical fibre amplifier comprises input means and output means, an optical fibre path connecting signal-transmissively said input and output means, wherein said optical fibre path comprises a Raman amplification fibre and a rare-earth-doped fibre, wherein said Raman amplification fibre and said rare-earth-doped fibre are set in a serial arrangement, whereby the Raman amplification fibre and the rare-earth-doped fibre are pumped by the same pump wavelength.

This is possible because the pump wavelength used for the Raman amplification is exactly in the range which fits very good with the wavelength needed for pumping the rare-earth doped fibre separately. The Raman amplification fibre and the rare-earth-fibre are pumped by one wavelength with only one pump. This leads to the desired result that no bandwidth is lost between the C and the L bands which form a continuous band. Furthermore, the useful amplification band is extended, allowing a higher capacity. The other desired result that is obtained is the reduction in the number of pump lasers resulting in simplifications of the product, and most important in cost reductions as the pumps and their power supplies are the expensive part in an optical amplifier.

The term "band" as used in the following means a part of the electromagnetic wavelength spectrum which can be used for transmission of data via fibre optic devices.

Preferably, said Raman amplification fibre is arranged upstream with respect to said rare-earth-doped fibre which leads to an improved noise figure.

In an advantageous embodiment, an optical fibre amplifier according to the invention comprises means for coupling a pump radiation with a wavelength less than a signal radiation wavelength into the Raman amplifier fibre and further selective coupling means are provided to facilitate passage of pump radiation, essentially residual pump radiation from the Raman amplification fibre to the rare-earth-doped fibre. Hence, residual pump wavelength from the Raman amplification fibre is not lost and can be used for further pumping the signal in the rare-earth-doped fibre. The residual pumping power from the FRA is typically from 10 to 60 % of the pumping power used for pumping the FRA.

Preferably, an optical isolator is disposed between said Raman amplification fibre and said rare-earth-doped fibre such that passage of at least signal radiation wavelength from the Raman amplifier fibre to the rare-earth-doped fibre is substantially blocked. This leads to a substantial reduction of multi-path interference phenomena (for instance due to Brillouin or Rayleigh-Back-Scattering, or to reflections on components or splices).

It is preferred that the pump radiation and signal radiation are counter-propagating in the Raman amplifier fibre. Thereby, a significant noise reduction is obtained with respect to co-propagating pump and signal.

It is advantageous that the optical fibre amplifier according to the invention is integrated in an optical fibre communication system. This allows to substitute in these systems conventionally used repeaters or optical amplifiers (semiconductor amplifiers or fibre amplifiers) by optical fibre amplifiers according to the invention combining a larger amplification band with a good conversion efficiency.

It is further preferred, that the Raman amplification fibre comprises silica and further at least one doping atom selected from Ge and P. The oxide compounds of these elements enhance Raman scattering due to their specific dipole characteristics.

Further advantages of the present invention are explained in the following drawings and in the examples.

It is understood that the aforementioned advantages and the features of the invention explained in the following, are not only used in the specifically described combination, but can also be used by a person skilled in the art in other combinations or alone, without exceeding the scope of the invention.

The invention is further explained by the following figures, where reference is made to the drawings and the description:
Figure 1 schematically depicts an exemplary embodiment of an optical fibre amplifier according to the invention.
Figure 2 schematically depicts a further exemplary embodiment of an optical fibre amplifier according to the invention.
Figure 3 schematically depicts still another exemplary embodiment of an optical fibre amplifier according to the invention.

In order to allow a better understanding of the present invention as described in the foregoing and in the following, the abbreviations and terms as used herein are explained:
- AGE: Active Gain Equalizer
An AGE is used for dynamic signal power/gain equalization.
- DCM: Dispersion Compensation Module
A DCM is used for compensating the dispersion accumulated along the transmission line.
- DCF: Dispersion Compensation Fibre
A DCF is used for compensating the dispersion accumulated along the transmission fibre.
- Distributed Raman amplification (DRA): The amplification occurs along the transmission fibre (the amplification fibre is the one that is deployed in the ground, and it contributes to the useful transmission distance). The physical principle involved is Stimulated Raman Scattering (SRS).
- OADM: Optical Add-Drop Multiplexer
An OADM is used for optical routing of data channels.
- S-band: S-band stands for a wavelength region "below the C-band", i.e. "below 1525 nm".
- Historic S-band: The term "historic" S-band stands for the wavelength region from 1450-1500 nm, corresponding to the standard amplification band of Thulium doped fibers.
- Localized Raman amplification: The amplification occurs inside a plug-in module (the amplification fibre is contained in the module and does not contribute to the useful span length). The physical principle involved is Stimulated Raman Scattering (SRS).
- Noise Figure: The term noise figure (NF) denotes the number of noise photons added to the signal by the amplification process, by reference to the initial signal power. This "initial" or reference point is defined regarding the practical needs of system designers and users, who are interested in the OSNR (optical signal-to-noise ratio) degradation brought by the amplification process, and in being able to fairly comparing amplification media. The reference point is then the end of the initial system, when no amplification is applied. G is the gain, and GxNF is then the number of noise photons added in excess by the amplification process at the system output ("in excess" excludes the noise photons already existing at the end of the initial system that are just amplified by a factor of G, exactly as the signal, and that do not further degrade the OSNR). NF is then a virtual number of noise photons such that the excess noise at the end of the amplified system (amplification turned on) is GxNF. In other words, the actual system gives the same quantity of excess noise as the hypothetical addition of NF supplementary noise photons to the signal at the end of the "initial" system and application of a noiseless amplification with an amplification factor of G.
In particular, for distributed amplification, NF is a virtual number of noise photons to be added in excess at the end of the transmission fibre, the last one, that just before the pumping unit, i.e. that within which amplification is obtained when the pump is turned on. When amplification is "on", the excess noise at the end of the amplified system is GxNF. The definition of NF is consistent for every amplification principle, i.e. for example localised or distributed amplification, obtained either by rare-earth doped fibres or by Raman scattering.
NF, compared to GxNF, is independent of G and the degradation in the OSNR is given by 1/OSNRout-1/OSNRinitial = NF / Psignal-initial.
In the above formulas as used in the present application, every quantities are given in linear scale (not dB), although these quantities are usually given in dB scale in technical/commercial specifications because gains and powers are additive in dB.
- Remote Amplification: The term "remote amplification" is used to cover a arrangement, when a length of rare-earth doped fibre is placed into the transmission fibre at a certain distance from the repeater sites. There, it is possible to get a significant gain (typically 10 dB) in this doped section of the fibre.
- Spectral Efficiency: Spectral efficiency means "modulation frequency divided by inter-channel spacing". E.g.: channels modulated at 40 GHz with 100 GHz spacing yield a spectral efficiency of 0.4. Spectral efficiency is a dimensionless-value that characterizes at which extent the available bandwidth is filled-up with an effective signal.
- VOA: Variable Optical Attenuator.
A VOA is used for "dynamical" attenuation of the signal, for example between or before or after the respective amplification stages.

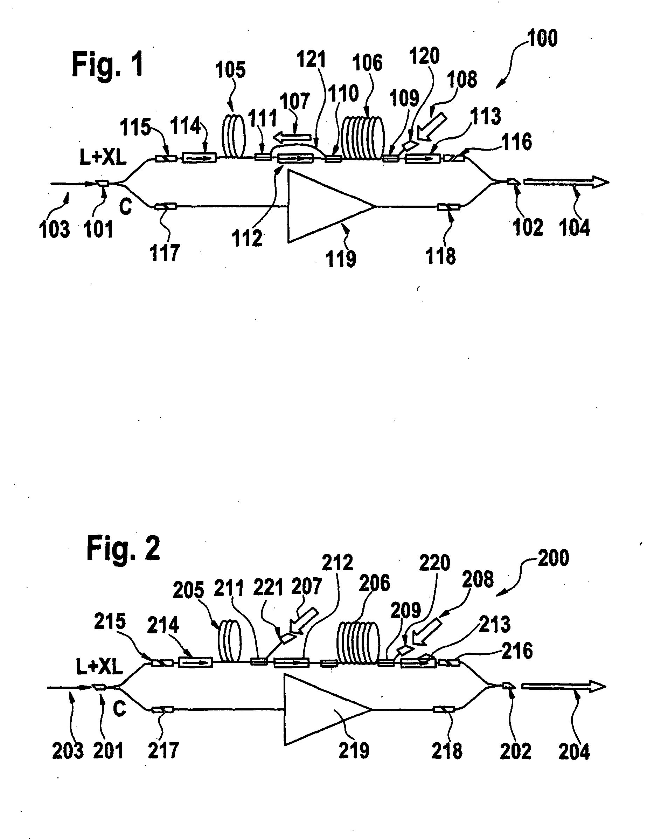

Figure 1 schematically shows an optical fibre amplifier wherein a Raman amplification fibre (106) is serially arranged in downstream direction with respect to the rare-earth-doped fibre (105). An arrangement vice-versa, i.e. the Raman amplification fibre (106) in upstream direction with respect to the rare-earth-doped fibre (105) is particularly preferred because this serial arrangement leads to a better noise figure of the overall optical fibre amplifier. The specific serial arrangement of the Raman amplification fibre (105) and of the rare-earth-doped fibre (105) depends on the specific working conditions of the respective amplifier set-up. The above-described embodiments are termed as "two-stage", because they contain only two amplifier stages, i.e. a Raman amplification fibre (105) and a rare-earth-doped fibre (106).

In the context of the present invention, it is understood, that also multi-stage optical fibre amplifier embodiments with a plurality of stages are within the scope of the invention. This means, that in one exemplary embodiment one or more additional Raman fibres and/or rare-earth-doped fibres are provided between the basic two amplification stages as specified above. In another embodiment instead of one single stage FRA, a two stage or a multi-stage FRA is used. The Raman amplification can be either localized or distributed.

In a more general manner, it is also within the scope of the invention, that before or after the basic two amplification stages as specified above one or more additional Raman amplification fibres and/or rare-earth-doped fibres are provided.

In still a more general way, it is also in the scope of the invention that one or more additional Raman amplification fibres and/or rare-earth-doped amplification fibres are provided before and/or between, and/or after the basic two amplification stages.

It is also within the scope of the invention that a rare-earth-doped amplification fibre that is pumped with residual pump from a Raman amplification fibre can receive additional pumping power, at the same wavelength(s) or at other wavelength(s), from other pump sources. These other sources can be other Raman amplification fibres (residual pump again) or any source known by the man skilled in the art (to mention only as non-restrictive examples:
semiconductor lasers, fibre lasers, Raman lasers, solid-state lasers, master-oscillator power-amplifier arrangements, combinations of the above, etc...).

It is also in the scope of the invention that one or more elements, such as OADMs, DCMs, VOAs or AGEs, deliberately chosen by a person skilled in the art, are provided before and/or between and/or after the basic two amplification stages.

The material of the Raman amplification fibre (106) comprises preferably silica doped with Germanium oxide compounds and/or with Phosphorous oxide compounds, with or without co-doping with other suitable compounds. It is also possible to use rare-earth-doped silica fibres, or silica fibres doped with other elements, as Raman amplification fibres. In another preferred embodiment also covered by the scope of the invention, doped or non-doped fluoride-based fibres are used as Raman amplification fibres. Other suitable materials known per se by a person skilled in the art are also covered by the scope of the invention.

The material of the rare-earth-doped fibre (105) comprises silica-based fibres doped with one or more rare-earth elements. In principle, every element of the so-called rare-earth elements of the periodic system of the elements can be used for the purpose of the present invention. Advantageously, elements like Erbium, Thulium, Praseodymium, Dysprosium and Neodymium are used. In another preferred embodiment covered by the scope of the invention, doped fluoride-based fibres are used, including Thulium-doped fluoride-based fibres. Other host materials are also covered by the scope of the invention.

The input signal 103 and the output signal 104 are represented by arrows, showing the direction of the signal flow. In the following, the term "downstream" refers to the direction of the signal flow and the term "upstream" refers to the counter-direction with regard to signal flow.

Input means 101, for example a transmitter or any other conventional means known to a person skilled in the art like a DCF module or OADM or transmission fibre, and output means 102, for example a deliberately chosen receiver or any other conventional means known to a person skilled in the art like a DCF module or OADM or transmission fibre, for coupling the input signal 103 into the amplifier and for receiving the output signal 104 are provided. As already stated above, these means are selected deliberately by the person skilled in the art and are adapted to the specific purpose and amplifier characteristics, i.e. its material, arrangement, input/output wavelength etc. For example, input means 101 can be a transmission fibre followed by a band demultiplexer, whereas output means 102 can be a band multiplexer followed by a transmission fibre.

In the specific embodiment as depicted in figure 1, the input means 101 must be able to split the input signal in at least two bands which are depicted in figure 1 with the letters C and (L + XL). The first band thereby comprising the C-band with a wavelength range from about 1525-1565 nm and the second bandwidth comprising the L-band with a wavelength range from typically 1565-1605nm. and the XL-band with wavelength range of typically more than 1605nm. The pumping wavelength for the FRA in serial arrangement with the Erbium-doped fibre is about 1500-1570 nm, preferably 1510-1530 nm.

In another embodiment, no such splitting of the input signal will take place, and the whole wavelength range, e.g. (C+L+XL) will pass the same arrangement as explained in the following for the (L+XL) band. The pumping wavelength for the FRA in serial arrangement with the Erbium-doped fibre is then about 1470-1525 nm, preferably 1490-1520 nm.

The (L+XL) band will pass the following arrangement:

A first inter-stage optical isolator 114 is arranged between the input means 101 and the rare-earth-doped fibre 105. Alternatively, no such inter-stage optical isolator 114 is provided. A second inter-stage optical isolator 112 is arranged between the rare-earth-doped fibre 105 and the Raman amplification fibre 106. The presence of said second optical isolator 112 is not mandatory under all circumstances, but its omission may lead, depending on the characteristics of the amplification stages and of their elements (splices, multiplexers, etc) to substantial multi-path interference (for instance due to Brillouin or Rayleigh-Back-Scattering, or to reflections on components or splices).

A third inter-stage optical isolator 113 is arranged between the Raman amplification fibre 106 and the output means 102, but is also optional. It is obvious, that the present invention covers also a plurality of accordingly arranged inter-stage optical isolators in multi-stage optical fibre amplifiers according to the invention. Optical isolators are well known to a person skilled in the art and are commercially available.

Commercially available wavelength-selective coupling (WSC) means are for example fused fibre couplers or thin film mirrors and are conventionally referred to as WDM. A first WDM 109 is selected to permit coupling of the pump wavelength 108 from the pump input port 120 to the Raman amplification fibre 106. A second WDM 110 and a third WDM 111 are arranged before and after the second inter-stage optical isolator 112.

In a further preferred embodiment of the invention, the WDM 109, 110 and 111 and the isolators 112, 113 and 114 are replaced by corresponding optical circulators, a single circulator replacing both a WDM and the isolator next to it.

A bypass 121 is selected to link the second WDM 110 with the third WDM 111. This arrangement allows also the by-passing of the second optical isolator 112. It is also understood, that WDMs in multistage optical amplifiers, also covered by the scope of the invention, are arranged in an analogous manner. In the general case, the bypass 121 can make the pump skip a more or less complex arrangement of one or more isolators, and/or one or more other amplification stages, and/or one or more equipment such as OADMs, DCMs,...

The pump radiation 108 is coupled into the WDM 109 and counter-propagates in upstream direction with respect to the input signal radiation of the (L+XL)-band towards the Raman fibre amplification fibre 106. Generally, the wavelength of the pump radiation 108 is smaller than the wavelength of the signal radiation of the signal band. It is preferred that the pump power is less than or equal to 1 W. The pump 120 may be any optical pump known by a person skilled in the art, and can also be a multi-wavelength pump.

After having passed the Raman fibre amplification fibre 106, the residual pump radiation will bypass the optical isolator 112 via WDM 109 and through bypass 121 , and is coupled via WDM 111 to the rare-earth-doped fibre 105 where it counter-propagates also in upstream direction. Downstream pumping is also possible inside the respective rare-earth doped fibre or the plurality of rare-earth doped fibres, a combination of both being often preferred, according to the choice of a person skilled in the art. The residual pump 107 from the one or more Raman amplification fibres 106 usually covers the wavelength range from 1500- 1570 nm and suits particularly well for pumping the rare-earth-doped fibre 105. This leads to a significant efficiency improvement compared to Raman and rare-earth-doped fibres pumped separately.

Further optical elements like OADMs, DCMs or VOA can be placed according to the specific requirements between the two basic stages 106 and 105 of the optical amplifier 100.

In another advantageous embodiment, the presence of a by-pass 121, of WDM 110 and 111 and of isolator 112 are optional depending upon the needs of the specific use.

It is understood that a device with different parallel combinations of serially arranged combinations of rare-earth-doped fibres and Raman amplification fibres along one transmission system, wherein each combination is amplifying at different wavelengths falls also within the scope of the invention. The wavelengths for such parallel amplifiers can be chosen according to the signal wavelengths.

The signal pathway for the C-band as depicted in figure 1 passes a conventional standard C-band amplifier, preferably an EDFA. Optionally, all or a part of the residual pump 107 is used to pump the C-band EDFA.

An arrangement as explained above leads to an amplification band which is extended up to 12.5 THz, allowing thus a capacity of about 10 Tbit/s with a spectral efficiency of 0.8. No bandwidth between the L and XL band is lost, because both bands form a continuous uniform band. The efficiency is greatly improved as the rare-earth-doped fibre 105 is pumped by the residual pump 107 from the Raman amplification fibre 106. This arrangement leads furthermore to a reduction in the use of passive components and in a significant reduction in the number of pump lasers.

Figure 2 schematically shows a two stage optical fibre amplifier wherein a Raman amplification fibre (206) is serially arranged in downstream direction with respect to the rare-earth-doped fibre (205). As explained under figure 1, an arrangement vice-versa, i.e. the Raman amplification fibre (206) in upstream direction with respect to the rare-earth-doped fibre (205) is particularly preferred for the same reasons.

It is also understood as under figure 1, that multi-stage optical fibre amplifier embodiments with a plurality of stages are within the scope of the invention, or that before or after the basic two amplification stages as specified above one or more additional Raman amplification fibres and/or rare-earth-doped fibres are provided.

In still a more general way, it is also in the scope of the invention that one or more additional Raman amplification fibres and/or rare-earth-doped amplification fibres are provided before and/or between, and/or after the basic two amplification stages.

It is also in the scope of the invention that one or more elements, such as OADMs, DCMs, VOAs or AGEs, deliberately chosen by a person skilled in the art, are provided before and/or between and/or after the basic two amplification stages.

The material of the Raman amplification fibre (206) and of the rare-earth-doped fibre (205) is the same as explained under figure 1.

The input signal 203 and the output signal 204 are represented by arrows, showing the direction of the signal flow. In the following, the term "downstream" refers to the direction of the signal flow and the term "upstream" refers to the counter-direction with regard to signal flow.

Input means 201, for example a transmitter or any other conventional means known to a person skilled in the art like a DCF module or OADM or transmission fibre, and output means 202, for example a deliberately chosen receiver or any other conventional means known to a person skilled in the art like a DCF module or OADM or transmission fibre, for coupling the input signal 203 into the amplifier and for receiving the output signal 204 are provided. For further details relating to the in- and output means it is referred to figure 1.

In the specific embodiment as depicted in figure 2, the input means 201 must be able to split the input signal in at least two bands which are depicted in figure 1 with the letters C and (L + XL). The first band thereby comprising the C-band with a wavelength range from about 1525-1565 nm and the second bandwidth comprising the L-band with a wavelength range from typically 1565-1605nm. and the XL-band with wavelength range of typically more than 1605nm. The pumping wavelength for the FRA in serial arrangement with the Erbium-doped fibre is about 1500-1570 nm, preferably 1510-1530 nm.

In another embodiment, no such splitting of the input signal will take place, and the whole wavelength range, e.g. (C+L+XL) will pass the same arrangement as explained in the following for the (L+XL) band. The pumping wavelength for the FRA in serial arrangement with the Erbium-doped fibre is then about 1470-1525 nm, preferably 1490-1520 nm.

The (L+XL) band will pass the following arrangement:

A first inter-stage optical isolator 214 is arranged between the input means 201 and the rare-earth-doped fibre 205. Alternatively, no such inter-stage optical isolator 214 is provided. A second inter-stage optical isolator 212 is arranged between the rare-earth-doped fibre 205 and the Raman amplification fibre 206. The presence of said second optical isolator 212 is not mandatory under all circumstances, but its omission may lead, depending on the characteristics of the amplification stages and of their elements (splices, multiplexers, etc) to substantial multi-path interference (for instance due to Brillouin or Rayleigh-Back-Scattering, or to reflections on components or splices).

A third inter-stage optical isolator 213 is arranged between the Raman amplification fibre 206 and the output means 202, but is also optional. It is obvious, that the present invention covers also a plurality of accordingly arranged inter-stage optical isolators in multi-stage optical fibre amplifiers according to the invention. Optical isolators are well known to a person skilled in the art and are commercially available.

Commercially available wavelength-selective coupling (WSC) means are for example fused fibre couplers or thin film mirrors and are conventionally referred to as WDM. A first WDM 209 is selected to permit coupling of the pump wavelength 208 from the pump input port 220 to the Raman amplification fibre 206. A second WDM 211 is arranged before the second inter-stage optical isolator 212 and the rare earth doped fibre 205 to permit coupling of the pump wavelength 207 which is essentially the same as the pump wavelenght 208 from the pump input port 221 to rare earth doped fibre 205.

As explained under figure 1, the WDM 209 and 211 and the isolators 212, 213 and 214 are replacable by corresponding optical circulators, a single circulator may replacing both a WDM and the isolator next to it.

The pump radiation 208 and 207 which are essentially equal are coupled into the WDM 209 and 211 and counter-propagate in upstream direction with respect to the input signal radiation of the (L+XL)-band towards the Raman amplification fibre 206 and the rare earth doped fibre 205. Generally, the wavelength of the pump radiation 208 and 207 is smaller than the wavelength of the signal radiation of the signal band. It is preferred that the pump powers are less than or equal to 1 W. The pumping of the Raman amplification fibre 106 and of the rare-earth doped fibre 105 occurs either simultaneously or with a defined time delay, i.e. either the Raman amplification fibre 106 or the rare-earth doped fibre 105 are pumped before the other one. The pumps 220, 221 may be any optical pump known by a person skilled in the art, and can also be a multi-wavelength pump. Alternatively, it is also possible to use only one pump and the pump wavelength is split up in order to pump the Raman amplification fibre 106 and the rare-earth doped fibre 105 simultaneously or with a defined time delay.

Further optical elements like OADMs, DCMs or VOA can be placed according to the specific requirements between the two basic stages 206 and 205 of the optical amplifier 200.

It is understood that a device with different parallel combinations of serially arranged combinations of rare-earth-doped fibres and Raman amplification fibres along one transmission system, wherein each combination is amplifying at different wavelengths falls also within the scope of the invention. The wavelengths for such parallel amplifiers can be chosen according to the signal wavelengths.

The signal pathway for the C-band as depicted in figure 2 passes a conventional standard C-band amplifier, preferably an EDFA.

An arrangement as explained above under figure 2 leads also to an amplification band which is extended up to 12.5 THz, allowing thus a capacity of about 10 Tbit/s with a spectral efficiency of 0.8. No bandwidth between the L and XL band is lost, because both bands form a continuous uniform band. The efficiency is greatly improved as the rare-earth-doped fibre 205 is pumped by the same pump wavelength as the Raman amplification fibre 206. This arrangement leads furthermore to a reduction in the use of passive components and in a significant reduction in the number of pump lasers.

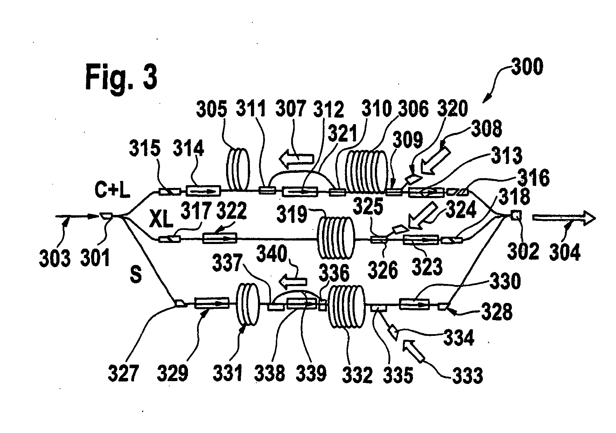

Figure 3 shows another advantageous embodiment of an optical fibre amplifier 300 according to the present invention.

In the embodiment according to figure 3, a the first band comprising a continuous (C+L) band is amplified by means of serial arrangement of a rare earth doped fibre (EDFA) 305 for essentially C-band amplification and a Raman amplification fibre (FRA) 306 for essentially L-band amplification covering the wavelength range of about 1525-1615 nm. The main pumping wavelength 308 is about 1420-1520 nm, preferably 1470-1500 nm, for the FRA 306 and for the EDFA 305.

The input signal 303 and the output signal 304 are represented by arrows, showing the direction of the signal flow. The terms "downstream" and "upstream" are used as in the foregoing sections.

Input means 301 and output means 302 for coupling the input signal 303 into the amplifier and for receiving the output signal 304 are provided. For specific details with respect to the input means 301 and 302 it is referred to the disclosure in the foregoing sections.

In the specific embodiment as depicted in figure 3, the input means 301 must be able to split the input signal in at least three bands which are depicted in figure 3 with the letters (C + L), XL and S. The first band thereby comprising the (C + L) -band with a wavelength range from about 1525-1615 nm, the second bandwidth comprising the XL-band with a wavelength range from typically 1615 and above up to 1700 nm and the third bandwidth covering an "extended" S-band, covering a wavelength range of about 1450-1525, preferably 1470-1515 nm.

The arrangement for amplifying the (C + L) band is basically the same as explained for the (L + XL) band in figures 1 and 2, so that it is referred to the entire disclosure of the foregoing explanation concerning alternatives or specific parts in the system setup.

A first inter-stage optical isolator 314 is arranged between the input means 315 and the rare-earth-doped fibre 305. A second inter-stage optical isolator 312 is arranged between the rare-earth-doped fibre 305 and the Raman amplification fibre 306.

A third inter-stage optical isolator 313 is arranged between the Raman amplification fibre 306 and the output means 302. It is obvious, that the present invention covers also a plurality of accordingly arranged inter-stage optical isolators in multi-stage optical fibre amplifiers according to the invention.

Commercially available wavelength-selective coupling (WSC) means are for example fused fibre couplers or thin film mirrors and are conventionally referred to as WDM. A first WDM 309 is selected to permit coupling of the pump wavelength 308 from the pump input port 320 to the Raman amplification fibre 306. A second WDM 310 and a third WDM 311 are arranged before and after the second inter-stage optical isolator 112. The respective WDM and optical isolator combinations as described in the foregoing may be replaced by optical circulators.

A bypass 321 is selected to link the second WDM 310 with the third WDM 311. This arrangement allows also the by-passing of the second optical isolator 312.

The pump radiation 308 is coupled into the WDM 309 and counter-propagates in upstream direction with respect to the input signal radiation of the (C+L)-band towards the Raman fibre amplification fibre 306. Generally, the wavelength of the pump radiation 308 is smaller than the wavelength of the signal radiation of the signal band. It is preferred that the pump power is less than or equal to 1 W. The pump 320 may be any optical pump known by a person skilled in the art, and can also be a multi-wavelength pump.

After having passed the Raman fibre amplification fibre 306, the residual pump radiation will bypass the optical isolator 312 via WDM 309 and through bypass 321 , and is coupled via WDM 311 to the rare-earth-doped fibre 305 where it counter-propagates also in upstream direction. The residual pump 307 from the one or more Raman amplification fibres 306 usually covers the wavelength range from 1420-1520 nm and suits particularly well for pumping the rare-earth-doped fibre 305. This leads to a significant efficiency improvement compared to Raman and rare-earth-doped fibres pumped separately.

This first two stage amplification arrangement is set in parallel mode with an amplification means covering the XL-band. The signal passes the third input means 317 and an optical isolator 322 before passing a Raman amplification fibre 319. Pump radiation 324 is coupled via the pump port 325 into the WDM 326 and counterpropagates in upstream direction with respect to the input signal radiation of the XL-band towards the Raman amplification fibre 319 covering the wavelength range of 1615 nm and above up to 1700 nm, preferably up to 1650-1660 nm. The pumping wavelength 324 of this Raman amplification fibre 319 stands about in the band 1500-1600 nm, preferably 1510-1560 nm. All or part of the residual power from this Raman amplification fibre 319 can be used to pump the (C+L) band EDFA, preferably the residual pump with wavelengths lower than 1520 nm.

The XL-band amplification line further comprises an optional optical isolator 323 and third output means 318 before coupled into the first output means 302.

A third amplification arrangement is furthermore added in a parallel arrangement, namely for an extended S band covering a wavelength range of about 1450-1525 nm, preferably 1470-1515 nm.

As shown in figure 3, this third amplification arrangement comprises an arrangement for amplifying the S band which is basically the same as explained for the (L+XL) band in figures 1 and 2, so that it is referred to the entire disclosure of the foregoing explanation concerning alternatives or specific parts in the system setup.

A first inter-stage optical isolator 329 is arranged between the fourth input means 327 and the rare-earth-doped fibre 331. A second inter-stage optical isolator 338 is arranged between the rare-earth-doped fibre 331 and the Raman amplification fibre 332.

A third inter-stage optical isolator 330 is arranged between the Raman amplification fibre 332 and the output means 328. It is obvious, that the present invention covers also a plurality of accordingly arranged inter-stage optical isolators in multi-stage optical fibre amplifiers according to the invention.

Commercially available wavelength-selective coupling (WSC) means are for example fused fibre couplers or thin film mirrors and are conventionally referred to as WDM. A first WDM 335 is selected to permit coupling of the pump wavelength 333 from the pump input port 334 to the Raman amplification fibre 332. A second WDM 336 and a third WDM 337 are arranged before and after the second inter-stage optical isolator 338.

A bypass 339 is selected to link the second WDM 336 with the third WDM 337. This arrangement allows also the by-passing of the second optical isolator 338.

The pump radiation 333 is coupled into the WDM 335 and counter-propagates in upstream direction with respect to the input signal radiation of the S-band towards the Raman fibre amplification fibre 332. Generally, the wavelength of the pump radiation 333 is smaller than the wavelength of the signal radiation of the signal band. It is preferred that the pump power is less than or equal to 1 W. The pump 320 may be any optical pump known by a person skilled in the art, and can also be a multi-wavelength pump.

After having passed the Raman fibre amplification fibre 332, the residual pump radiation 340 will bypass the optical isolator 338 via WDM 336 and through bypass 339 , and is coupled via WDM 337 to the rare-earth-doped fibre 331 where it counter-propagates also in upstream direction. The residual pump 340 from the one or more Raman amplification fibres 332 usually covers the wavelength range from 1350 - 1430 nm, preferably from 1370 - 1425 nm, and suits particularly well for pumping the rare-earth-doped fibre 331. This leads to a significant efficiency improvement compared to Raman and rare-earth-doped fibres pumped separately.

Alternatively, this amplification arrangement comprises either a TDFA, or a TDFA and a FRA in a serial arrangement without adding residual pump wavelength from the FRA to the TDFA.

With an arrangement as explained in figure 3, an effective bandwidth of over 13 THz with only one demultiplexing is obtained, or in a second alternative embodiment over 17 THz with only two demultiplexings.

A further preferred embodiment also covered by the scope of the invention concerns also the amplification of the (C+L) band and the S band by the system setup as described in figure 1, but without amplifying the XL-band.

The (C+L) band or the extended S-band optical amplifiers according to the invention are also compatible with distributed Raman amplification in the C and L-bands, respectively, or in the extended S-band.

In a further preferred alternative, the Raman amplification of the optical amplifier according to the invention for all transmission bands is distributed Raman amplification.

## Claims

1. Optical fibre amplifier (100) comprising input means (101) and output means (102), an optical fibre path connecting signal-transmissively said input and output means, wherein said optical fibre path comprises a Raman amplification fibre (106) and a rare-earth-doped fibre (105), wherein the Raman amplification fibre (106) and the rare-earth-doped fibre (105) are set in a serial arrangement,
**characterized in**
**that** the Raman amplification fibre (106) and the rare-earth-doped fibre (105) are pumped by the same pump wavelength.

2. Optical fibre amplifier according to claim 1, **characterized in that** said Raman fibre amplifier (106) is arranged upstream with respect to said rare-earth-doped fibre amplifier (105).

3. Optical fibre amplifier according to claim 1, **characterized in that** said Raman amplification fibre (106) is arranged downstream with respect to said rare-earth-doped fibre (105).

4. Optical fibre amplifier according to one of the preceding claims further comprising means (109) for coupling a pump radiation with a wavelength less than a signal radiation wavelength into the Raman amplification fibre (106).

5. Optical fibre amplifier according to claim 4, **characterized in that** selective coupling means (110, 111) are provided to facilitate passage of pump radiation from the Raman amplification fibre (106) to the rare-earth-doped fibre (105).

6. Optical fibre amplifier according to claim 5, **characterized in that** the pump radiation in the passage from the Raman amplification fibre (106) to the rare-earth-doped fibre(105) essentially consists of residual pump radiation.

7. Optical fibre amplifier according to claim 5 or 6, **characterized in that** the coupling means (110, 111) comprise one or more optical circulators and/or WDMs.

8. Optical fibre amplifier according to one of the preceding claims 5 to 7, **characterized in that** an optical isolator (112) is disposed between said Raman amplification fibre (106) and the rare-earth-doped fibre (105) such that passage of at least signal radiation wavelength from the Raman amplification fibre (106) to the rare-earth-doped fibre (105) is substantially blocked

9. Optical fibre amplifier according to one of the preceding claims, **characterized in that** the pump radiation and signal radiation are counter-propagating in the Raman amplification fibre.

10. Optical fibre amplifier according to one of the preceding claims, **characterized in that** the bandwidth of the input signal is split up in a multiplicity of single bands.

11. Optical fibre amplifier according to claim 10, **characterized in that** said multiplicity of bands comprises a first band comprising the C-band and a second band comprising the L and the XL bands.

12. Optical fibre amplifier according to claim 11, **characterized in that** said multiplicity of bands comprises a first band comprising the C and the L bands and a second band comprising the XL band.

13. Optical fibre amplifier according to claim 11 or 12, **characterized in that** the second band is amplified by an optical fibre amplifier (100) according to one of the preceding claims.

14. Optical fibre amplifier according to claim 11 or 12, **characterized in that** the first bandwidth is amplified by a C-band rare-earth-doped fibre (119).

15. Optical fibre amplifier according to one of the preceding claims 10 to 14, **characterized in that** the first bandwidth and the second bandwidth are combined after amplification.

16. Optical fibre communication system comprising an optical fibre amplifier (100) according to one of the claims 1 to 15.

17. Optical fibre communication system according to claim 16, **characterized in, that** said system is an optical fibre communication system comprising a transmitter for signal radiation, a receiver for the signal radiation spaced apart from the transmitter and a transmission path connecting said transmitter and receiver comprising at least one optical fibre amplifier (100) according to one of the preceding claims 1 to 15 and further comprising a source of pump radiation (120).

18. Optical fibre communication system according to claim 16 or 17, **characterized in that** the pump wavelength comprises the range comprising 1.15 µm to 1.6 µm and the signal wavelength comprises the range comprising 1.20 µm to 1.7 µm.

## Amended claims

### Amended claims in accordance with Rule 86(2) EPC.

**1.** Optical fibre amplifier (100) comprising input means (101) and output means (102), a first and a second optical fibre path connecting said input and output means, wherein the first optical fibre path comprises a Raman amplification fibre (106) and a rare-earth-doped fibre (105) for a first set of bands, wherein the Raman amplification fibre (106) and the rare-earth-doped fibre (105) are connected in a serial arrangement, and the second optical path comprises a rare-earth doped amplifier (119) for a second set of bands, and where at least the Roman amplification fibre (106) and the rare-earth-doped fibre (105) in the first optical path are pumped by the same pump wavelength.

**2.** Optical fibre amplifier according to claim 1 further comprising means (109) for coupling a pump radiation with a wavelength less than a signal radiation wavelength into the Raman amplification fibre (106).

**3.** Optical fibre amplifier according to claim 1, **characterized in that** selective coupling means (110, 111) are provided to facilitate passage of pump radiation from the Raman amplification fibre (106) to the rare-earth-doped fibre (105).

**4.** Optical fibre amplifier according to claim 5 or 6, **characterized in that** the coupling means (110, 111) comprise one or more optical circulators and/or WDMs.

**5.** Optical fibre amplifier according to claims 1, **characterized in that** an optical isolator (112) is disposed between said Raman amplification fibre (106) and the rare-earth-doped fibre (105) such that passage of at least signal radiation wavelength from the Raman amplification fibre (106) to the rare-earth-doped fibre (105) is substantially blocked

**6.** Optical fibre amplifier according to claim 1, **characterized in that** the pump radiation and signal radiation are counter-propagating in the Raman amplification fibre.

**7.** Optical fibre amplifier according to claim 1, **characterized in that** said the second set of bands comprises the C-band and the first set of band comprising the L and the XL bands.

**8.** Optical fibre amplifier according to claim 1, **characterized in that** said the second set of bands comprises the C-band and the L-band and the first set of band comprising the XL bands.

**9.** Optical fibre amplifier according to claim 1, **characterized in that** the first set of bands and the second set of bands are combined after amplification.

**10.** Optical fibre communication system comprising an optical fibre amplifier (100) according to claims 1.

**11.** Optical fibre communication system according to claim 10, **characterized in, that** said system is an optical fibre communication system comprising a transmitter for signal radiation, a receiver for the signal radiation spaced apart from the transmitter and a transmission path connecting said transmitter and receiver comprising at least one optical fibre amplifier (100) according to claims 1 and further comprising a source of pump radiation (120).

**12.** Optical fibre communication system according to claim 10, **characterized in that** the pump wavelength comprises the range comprising 1.15 µm to 1.6 µm and the signal wavelength comprises the range comprising 1.20 µm to 1.7 µm.
